# EUROPÄISCHE PATENTSCHRIFT

(11) **EP 3 970 270 B1**
(45) Veröffentlichungstag und Bekanntmachung des Hinweises auf die Patenterteilung: **26.07.2023**
(21) Anmeldenummer: 20726313.8
(22) Anmeldetag: 06.05.2020
(51) Int. Cl.: H02S 20/10, F24S 25/12, F24S 25/636, H02S 30/00, F24S 25/60

(54) **LÄNGSPROFIL UND MODULKLEMME FÜR EIN MONTAGESYSTEM FÜR SOLARMODULE SOWIE EIN SOLCHES MONTAGESYSTEM**
LONGITUDINAL PROFILE AND MODULE CLAMP FOR A MOUNTING SYSTEM FOR SOLAR MODULES, AND A MOUNTING SYSTEM OF SUCH A TYPE
PROFILÉ LONGITUDINAL ET BORNE DE MODULE POUR UN SYSTÈME DE MONTAGE POUR MODULES SOLAIRES AINSI QU'UN TEL SYSTÈME DE MONTAGE

(30) Priorität: 13.05.2019 DE 102019003390
(43) Veröffentlichungstag der Anmeldung: 23.03.2022
(73) Patentinhaber: Schletter International B.V., 1077 ZX Amsterdam (NL)
(72) Erfinder: ZAPFE, Cedrik, 85567 Grafing (DE)
(74) Vertreter: Mötsch, Andreas
(86) Internationale Anmeldenummer: PCT/EP2020/062508
(87) Internationale Veröffentlichungsnummer: WO 2020/229244

(56) Entgegenhaltungen:
- DE-U1-202010 006 443
- DE-U1-202012 012 290
- DE-U1-202016 008 379

## Beschreibung

Die vorliegende Erfindung betrifft ein Längsprofil und ein Modulklemme für ein Montagesystem für Solarmodule. Ferner betrifft die vorliegende Erfindung ein Montagesystem für Solarmodule. Ein solches Montagesystem kann insbesondere zum Einsatz im Freiland ausgebildet sein. Solche Montagesysteme werden häufig auch als Freilandmontagesysteme bezeichnet. Das Dokument DE 20 2016 008379 U1 zeigt ein Längsprofil für ein Montagesystem für Solarmodule aus dem Stand der Technik.

Es ist eine Aufgabe der vorliegenden Erfindung, ein Längsprofil für ein Montagesystem für Solarmodule bereitzustellen, das kostengünstig herzustellen und dennoch hohe Festigkeitswerte aufweist. Es ist ferner eine Aufgabe der vorliegenden Erfindung eine Modulklemme bereitzustellen, mit der Solarmodule über ihren Modulrahmen an einem Längsprofil befestigt werden können. Darüber hinaus ist es eine Aufgabe der vorliegenden Erfindung ein Montagesystem für Solarmodule bereitzustellen, das kostengünstig herzustellen ist und hohen Belastungen standhalten kann.

Diese Aufgaben werden mit einem Längsprofil mit den Merkmalen des Anspruchs 1, einer Modulklemme mit den Merkmalen des Anspruchs 8 4.Q. und einem Montagesystem mit den Merkmalen des Anspruchs 14 gelöst.

Weitere vorteilhafte Ausführungsformen sind in den abhängigen Ansprüchen angegeben.

Das erfindungsgemäße Längsprofil für ein Montagesystem für Solarmodule umfasst wenigstens einen Anschlagbereich, der zur Befestigung des Längsprofils an einem Querprofil ausgebildet ist, und wenigstens einen Kopfbereich, der über wenigstens einen Verbindungsabschnitt mit dem wenigstens einen Anschlagbereich verbunden ist. Der wenigstens eine Anschlagbereich weist wenigstens eine Abstützfläche zur Abstützung an dem Querprofil auf. Der wenigstens eine Kopfbereich hat wenigstens eine Auflagefläche für wenigstens einen Abschnitt eines Modulrahmens des Solarmoduls. Der wenigstens eine Kopfbereich weist wenigstens einen Angriffsvorsprung auf, der als Angriffspunkt für eine Befestigungseinrichtung ausgebildet ist.

Der wenigstens eine Kopfbereich kann von wenigstens einem Hinterschnitt ausgebildet werden. Der wenigstens eine Kopfbereich kann wenigstens zwei in entgegengesetzte Richtungen weisende Angriffsvorsprünge aufweisen, die als Angriffspunkte für eine Befestigungseinrichtung zur Befestigung eines Modulrahmens an dem Längsprofil ausgebildet sind. Eine derartige Befestigungseinrichtung kann beispielswiese eine Modulklemme sein. Der wenigstens eine Kopfbereich kann wenigstens einen Auflageabschnitt haben, der die wenigstens zwei Angriffsvorsprünge verbindet. Der wenigstens eine Auflageabschnitt kann die wenigstens eine Auflagefläche haben. Die wenigstens eine Auflagefläche und die wenigstens eine Abstützfläche können sich zumindest im Wesentlichen parallel zueinander erstrecken. Das Längsprofil kann zur Aufnahme weiterer Komponenten ausgebildet sein. Das Längsprofil kann als Hohlprofil ausgebildet sein.

Der wenigstens eine Anschlagbereich kann wenigstens eine Befestigungsöffnung aufweisen. Über die wenigstens eine Befestigungsöffnung kann wenigstens ein Befestigungselement in das Längsprofil eingesetzt werden. Die wenigstens eine Befestigungsöffnung kann schlitzförmig ausgebildet sein. Die wenigstens eine Befestigungsöffnung kann sich vorzugsweise über die gesamte Länge des Längsprofils erstrecken. Über die wenigstens eine Befestigungsöffnung kann das wenigstens eine Befestigungselement in das Längsprofil einsetzbar ist. Die wenigstens eine Befestigungsöffnung kann zwischen wenigstens zwei in das Innere des Längsprofils weisenden Vorsprüngen ausgebildet sein. Die beiden Vorsprünge können mit wenigstens einem Befestigungselement in Eingriff bringbar sein. Ein derartiges Befestigungselement kann so ausgebildet sein, dass es die beiden Vorsprünge hintergreifen kann, um das Längsprofil an einem Querprofil anbringen zu können.

Der wenigstens eine Anschlagbereich kann wenigstens einen Abstützabschnitt aufweisen. An dem wenigstens einen Abstützabschnitt kann wenigstens eine Abstützfläche ausgebildet sein. Es können beiderseits der Befestigungsöffnungen Abstützabschnitte vorgesehen sein, die jeweils eine Abstützfläche aufweisen. Der wenigstens eine Kopfbereich kann wenigstens einen Abschnitt aufweisen, der im Wesentlichen rechtwinklig zu einem der Abstützabschnitte verläuft. Dieser Abschnitt kann den jeweiligen Abstützabschnitt mit dem wenigstens einen Verbindungsabschnitt verbinden.

Der wenigstens eine wenigstens eine Verbindungsabschnitt kann sich unter einem Winkel zu der wenigstens einen Abstützfläche und/oder der wenigstens einen Auflagefläche erstrecken. Das wenigstens eine Längsprofil kann zwei Verbindungsabschnitte aufweisen. Der Abstand zwischen den beiden Verbindungsabschnitten kann sich verändern. Vorzugsweise kann sich der Abstand zwischen den Verbindungsabschnitten ausgehend von dem Anschlagbereich in Richtung des Kopfbereichs verringern. Am Übergang zu den Angriffsvorsprüngen kann der Abstand am geringsten sein. Im Bereich der Angriffsvorsprüngen vergrößert sich der Querschnitt des Längsprofils wieder. Die Angriffsvorsprünge können jeweils eine Nase aufweisen oder in Form einer Nase ausgebildet sein.

Es kann ferner ein Verbindungsprofil vorgesehen sein, das zur Verbindung von wenigstens zwei Längsprofilen der voranstehend beschriebenen Art ausgebildet ist. Das Verbindungsprofil kann derart ausgebildet sein, dass das Verbindungselement in die zu verbindenden Längsprofile formschlüssig einsetzbar ist, um eine Verbindung mit diesen Längsprofilen herzustellen. Dadurch kann eine befestigungsmittelfreie Verbindung zwischen dem Verbindungsprofil und den über das Verbindungsprofil zu verbindenden Längsprofilen herstellbar ist. Dementsprechend sind aufgrund des Verbindungsprofils keine Schrauben o. ä. Elemente notwendig, um eine Verbindung zwischen dem Verbindungsprofil herzustellen. Das Verbindungsprofil kann über eine geeignete Passung in den Längsprofilen aufgenommen werden.

Das Verbindungsprofil kann wenigstens ein Positionierelement aufweisen. Mit dem wenigstens einen Positionierelement können die zu verbindenden Längselemente in Anlage gebracht werden. Dadurch kann sichergestellt werden, dass die Längsprofile ihre vorbestimmte Position an dem Verbindungsprofil einnehmen. Das wenigstens eine Positionierelement kann somit die Mitte des Verbindungsprofils markieren.

Die vorliegende Erfindung betrifft ferner eine Modulklemme zur Befestigung eines Modulrahmens eines Solarmoduls an einem Längsprofil. Die Modulklemme umfasst einen klammerförmigen Körper, der wenigstens zwei Arme aufweist, die mit einem Kopfbereich eines Längsprofils in Eingriff bringbar sind, wenigstens ein Anlageelement, das zur Anlage an dem Modulrahmen ausgebildet ist, und wenigstens eine Verbindungschraube, die den klammerförmigen Körper mit dem Anlageelement verbindet.

Jeder Arm des klammerförmigen Körpers kann wenigstens einen in Richtung des jeweils anderen Arms weisenden Vorsprung aufweisen. Die Vorsprünge können dazu ausgebildet sein, jeweils einen der Angriffsvorsprünge des Längsprofils zu hintergreifen. Jeder der Angriffsvorsprünge des Längsprofils kann dazu eine Nase aufweisen bzw. ausbilden, die von einem der Vorsprünge der Arme des klammerförmigen Körpers hintergriffen werden kann. Mit der wenigstens eine Schraube kann eine Zugkraft auf den klammerförmigen Körper ausgeübt werden, wenn der klammerförmige Körper an dem Angriffsabschnitt des Längsprofils angreift und das Anlageelement an dem Modulrahmen anliegt. Mit dieser Zugkraft kann der klammerförmige Körper gedehnt bzw. gestreckt werden und so das Solarmodul an dem Längsprofilen befestigen.

Das Anlageelement kann wenigstens einen Anlageabschnitt zur Anlage an dem Modulrahmen und wenigstens einen Abstützabschnitt zum Abstützen an dem klammerförmigen Körper haben. Wenn das wenigstens eine Anlageelement in Anlage mit einem Modulrahmen ist, und die Schraube den klammerförmigen Körper und das Anlageelement gegeneinander verspannt werden, kann sich das wenigstens eine Anlageelement mit seinem Abstützabschnitt an dem klammerförmigen Körper abstützen. Dadurch kann ein Verkippen des Anlageelements verhindert werden. Ein Verkippen des Anlageelements könnte unter Umständen zum Lösen der Verbindung mit dem Modulrahmen führen.

Es kann ein Querprofil zur Verbindung mit einem Längsprofil gemäß der Erfindung bereitgestellt werden. Das Querprofil weist wenigstens eine Öffnung auf. Die wenigstens eine Öffnung hat einen Einführabschnitt und einen Halteabschnitt aufweisen, wobei der Einführabschnitt und der Halteabschnitt unterschiedliche Querschnitte haben. Die wenigstens eine Öffnung kann schlüsselförmig ausgebildet sein. Der Einführabschnitt kann einen größeren Querschnitt als der Halteabschnitt aufweisen. Mit der Öffnung kann eine befestigungsmittelfreie Verbindungsmöglichkeit mit weiteren Elementen bereitgestellt werden. Das Querprofil kann einen im Wesentlichen C-förmigen Querschnitt aufweisen. Das Querprofil kann zwei im Wesentlichen parallel zueinander verlaufende Schenkel aufweisen, die über einen Verbindungschenkel miteinander verbunden sind. Die wenigstens eine Öffnung kann in dem Verbindungschenkel ausgebildet sein. Der Einführabschnitt und der Halteabschnitt der Öffnung können sich in Längsrichtung des Querelements aneinander anschließen.

Es kann ferner gemäß der Erfindung ein Verbinder zur Verbindung eines Längsprofils und eines Querprofils bereitgestellt werden. Der Verbinder weist wenigstens ein Verriegelungselement auf, das zum Einsetzen in den Einführabschnitt der Öffnung und zum Hintergreifen der Ränder der Öffnung im Halteabschnitt ausgebildet ist. Dadurch kann eine einfach herzustellende Verbindung erreicht werden, die ohne zusätzliche Verbindungsmittel auskommt und durch das Gewicht der Solarmodule und der Längsprofile gesichert werden kann.

Es wird ein Befestigungssystem zur Befestigung von Solarmodulen an einem Längsprofil bereitgestellt. Das Befestigungssystem umfasst wenigstens ein Befestigungsprofil, das zur abschnittsweisen Aufnahme von Modulrahmen eines Solarmoduls ausgebildet ist, wenigstens eine Klemmeinrichtung, die das wenigstens eine Befestigungsprofil an dem Längsprofil hält, und wenigstens ein Befestigungselement, das mit dem Befestigungsprofil in Eingriff bringbar ist, um die Modulrahmen der Solarmodule an dem Befestigungsprofil zu halten.

Das Befestigungsprofil kann wenigstens zwei Aufnahmeabschnitte aufweisen, in die das wenigstens eine Befestigungselement zum Befestigen der Modulrahmen eingreifen kann. Das wenigstens eine Befestigungselement kann zwei Schenkel aufweisen, deren Enden aufeinander zu weisen. Mit diesen Enden können die Schenkel in jeweils einen der Aufnahmeabschnitte des Befestigungsprofils eingreifen. Die Solarmodule können sich über ihre Modulrahmen an einer der Seitenflächen der Schenkel des Befestigungselements abstützen. Das Befestigungselement kann insbesondere an einem Ende des Befestigungsprofils vorgesehen sein. Das Befestigungsprofil kann über die wenigstens eine Klemmeinrichtung an dem Längsprofil befestigt werden. Die Solarmodule können über die Befestigungselemente an dem Befestigungsprofil gehalten werden.

Die vorliegende Erfindung betrifft ferner ein Montagesystem mit einem oder mehreren Längsprofilen, einem oder mehreren Querprofilen, die mit den Längsprofilen verbunden sind, und einem oder mehreren Pfosten, die mit einem oder mehreren Querprofilen verbunden sind. Das Querprofil kann ein Querprofil der voranstehend beschriebenen Art sein.

Das Montagesystem kann insbesondere zum Einsatz als Freilandmontagesystem ausgebildet sein. Dies bedeutet, dass das Montagesystem im Gelände aufgebaut werden kann.

Das Montagesystem kann einen oder mehrere Verbinder zum Verbinden eines Längsprofils mit einem Querprofil aufweisen. Das Montagesystem kann wenigstens eine Modulklemme zum Befestigen von Modulrahmen an einem Längsprofil aufweisen. Das Montagesystem kann wenigstens ein Befestigungssystem zum Befestigen von Modulrahmen an einem Längsprofil aufweisen.

Das Montagesystem kann wenigstens eine Neigungsvorrichtung aufweisen, mit der die Neigung der Solarmodule einstellbar ist. Mit der Neigungsvorrichtung können die Solarmodule insbesondere in Querrichtung geneigt werden. Die Neigungsvorrichtung kann an wenigstens einem der Pfosten vorgesehen sein. Die Neigungsvorrichtung kann einen stationären Pfostenabschnitt und einen verschwenkbaren Neigungsabschnitt aufweisen, der relativ zu dem Pfostenabschnitt um einen Schwenkpunkt verschwenkbar ist. Der stationäre Postenabschnitt kann mit einem Pfosten verbunden oder von einem Pfosten gebildet werden. An dem Neigungsabschnitt kann ein Lochraster, das mit wenigstens einer Schraube zum Einstellen des Neigungswinkels zusammenwirkt. Zusätzlich oder alternativ kann ein Langloch vorgesehen sein, das mit einer Schraube zum Einstellen des Neigungswinkels zusammenwirkt. Das Langloch kann von einer Aneinanderreihung von Bohrungen gebildet werden, wie dies beispielswiese bei Wasserpumpenzangen der Fall ist. Das Langloch kann gekrümmt sein. Der Neigungsabschnitt kann zur Einstellung des Neigungswinkels um einen Schwenkpunkt verschwenkt werden. Der eingestellte Neigungswinkel kann über die Schraube und das gekrümmte Langloch fixiert werden. Das gekrümmte Langloch kann den Winkelbereich vorgeben, in dem der Neigungswinkel einstellbar ist.

Im Folgenden werden beispielhafte Ausführungsformen mit Bezug auf die beigefügten Figuren beschrieben. Es stellen dar:
- Figuren 1 bis 3: perspektivische Ansichten eines Montagesystems für Solarmodule gemäß einer ersten Ausführungsform;
- Figuren 4 bis 6: verschiedene Ansichten eines Längsprofils des Montagesystems gemäß der Figuren 1 bis 3;
- Figuren 7 bis 11: verschiedene Ansichten eines Verbindungselements zum Verbinden der Längsprofils gemäß der Figuren 4 bis 6;
- Figuren 12 bis 16: verschiedene Ansichten einer Modulklemme gemäß einer ersten Ausführungsvariante zum Anbringen von Solarmodulen an den Längsprofilen gemäß der Figuren 4 bis 6;
- Figuren 17 bis 21: verschiedene Ansichten einer Modulklemme gemäß einer zweiten Ausführungsform zum Anbringen von Solarmodulen an den Längsholmen gemäß der Figuren 4 bis 6;
- Figur 22: eine Seitenansicht des Montagesystems gemäß der Figuren 1 bis 3;
- Figur 23: eine perspektivische Ansicht der Verbindung eines Längsprofils gemäß der Figuren 4 bis 6 mit einem Modulrahmen über eine Modulklemme gemäß der Figuren 12 bis 16;
- Figur 24: eine Ansicht der Verbindung eines Pfostens mit einem Querprofil;
- Figur 25 bis 32: verschiedene Ansichten der Verbindung eines Längsprofils gemäß der Figuren 4 bis 6 mit einem Querprofil;
- Figuren 33 bis 36: perspektivische Ansichten eines Montagesystems für Solarmodule gemäß einer zweiten Ausführungsform;
- Figur 37: eine Seitenansicht des Montagesystems gemäß der Figuren 33 bis 36;
- Figuren 38 bis 44: verschiedene Ansichten eines Montagesystems zum Befestigen von Solarmodulen an einem Längsprofil gemäß der Figuren 4 bis 6;
- Figuren 45 und 46: Ansichten von Montagesystemen gemäß einer dritten Ausführungsform, deren Neigungswinkel einstellbar ist; und
- Figuren 47 bis 52: verschiedene Ansichten einer Neigungsvorrichtung.

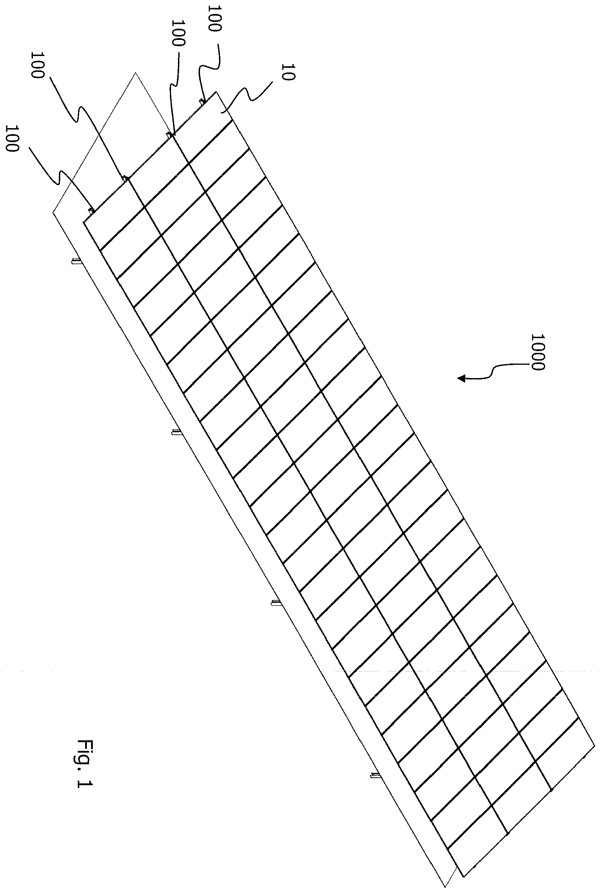

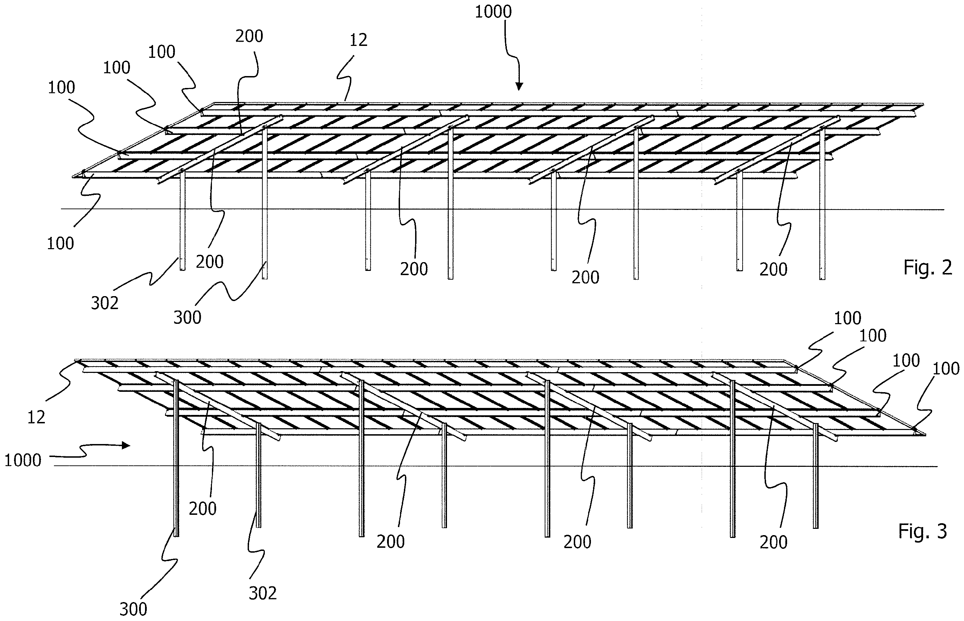

Die Figuren 1 bis 3 zeigen verschiedene perspektivische Ansichten eines Montagesystems 1000 für Solarmodule 10. Die Solarmodule 10 sind bei dieser Ausführungsform des Montagesystems 1000 in vertikaler Richtung angeordnet, d. h. im Hochformat bzw. "portrait" (siehe Figur 1). Die Solarmodule 10 weisen Modulrahmen 12 auf.

Das Montagesystem 1000 weist Längsprofile 100, Querprofile 200 und Pfosten 300, 302 auf. Jeweils ein Querprofil 200 ist mit den beiden Pfosten 300 und 302 verbunden. Die Querprofile 200 tragen die Längsprofile 100, an denen die Solarmodule 10 über ihre Modulrahmen 12 angebracht sind. Die Pfosten 300 und 302 unterscheiden sich in ihrer Länge, wobei die Pfosten 300 länger als die Pfosten 302 sind. Durch die unterschiedlichen Längen der Pfosten 300 und 302 sind die Solarmodule 10 geneigt.

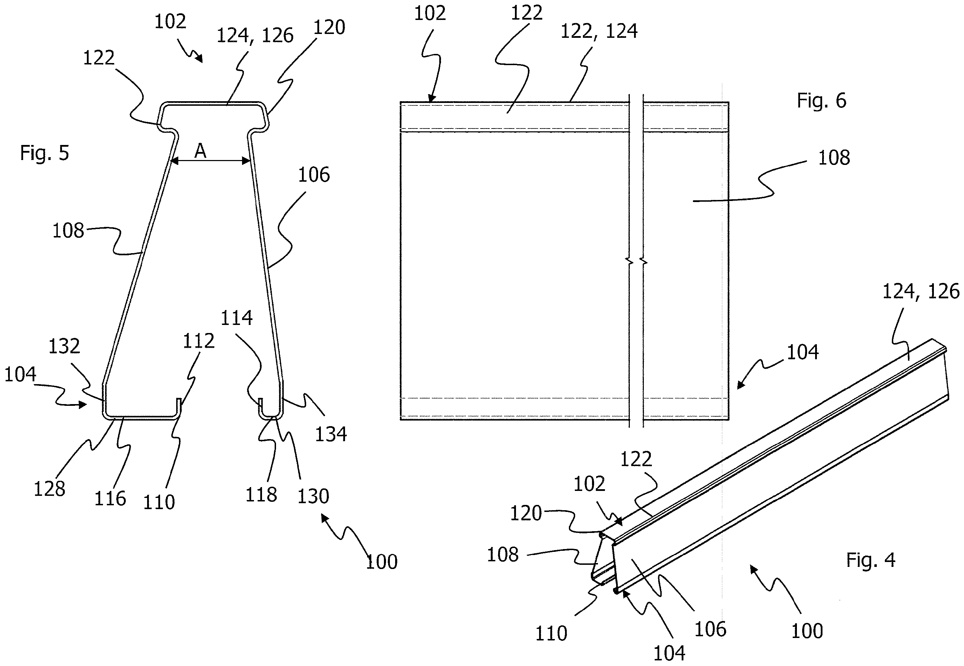

Die Figuren 4 bis 6 zeigen verschiedene Ansichten eines Längsprofils 100. Die Längsprofile 100 werden häufig auch als Pfetten bezeichnet. Das Längsprofil 100 weist einen Kopfbereich 102 und einen Anschlagbereich 104 auf. Der Kopfbereich 102 und der Anschlagbereich 104 sind über Verbindungsabschnitte 106 und 108 miteinander verbunden. Über den Anschlagbereich 104 kann das Längsprofil 100 an den Querprofilen 200 befestigt werden. Der Anschlagbereich 104 weist eine Befestigungsöffnung 110 auf, durch die ein Befestigungselement (nicht gezeigt) in das Längsprofil 100 eingesetzt werden kann. Die Befestigungsöffnung 110 ist schlitzförmig ausgebildet und kann sich über die gesamte Länge der Längsprofile 100 erstrecken. Die Befestigungsöffnung 110 wird zwischen zwei in das Innere des Längsprofils 100 weisenden Vorsprüngen 112, 114 festgelegt. An den Vorsprüngen 112 und 114 kann ein nicht gezeigtes Befestigungselement angreifen, um die Längsprofile 100 sicher an den Querprofilen 200 halten zu können. Der Anschlagbereich 104 weist ferner zwei Abstützabschnitte 116 und 118 auf, die seitlich neben der Befestigungsöffnung 110 vorgesehen sind. Der Abstützabschnitt 116 ist länger als der Abstützabschnitt 118.

Ausgehend von dem Anschlagbereich 104 erstrecken sich die Verbindungsabschnitte 106 und 108 in Richtung des Kopfbereichs 102. Die Verbindungsabschnitte 106 und 108 verringern in Richtung des Kopfbereichs 102 ihren Abstand A zueinander. Der kleinste Abstand A zwischen den Verbindungsabschnitten 106 und 108 am bzw. kurz vor dem Übergang in den Kopfbereich 102 vor. Im Kopfbereich 102 weitet sich der Querschnitt des Längsprofils 100 mittels zwei Angriffsvorsprüngen 120 und 122 wieder auf. Die Angriffsvorsprünge 120 und 122 erstrecken sich in entgegengesetzter Richtung. An den Angriffsvorsprüngen 120, 122 kann eine Modulklemme (nicht gezeigt) angreifen, um die Solarmodule 10 mit ihren Modulrahmen 12 (nicht gezeigt) an den Längsprofilen 100 befestigen zu können.

Die Vorsprünge 120 und 122 sind über einen Auflageabschnitt 124 miteinander verbunden, der eine Auflagefläche 126 für die Modulrahmen 12 (nicht gezeigt) aufweist. Die Abstützabschnitte 116 und 118 weisen jeweils eine Abstützfläche 128, 130 auf. Die Abstützflächen 128, 130 und die Auflagefläche 126 können sich im Wesentlichen parallel zueinander erstrecken.

Der Anschlagbereich 104 weist ferner zwei Abschnitte 132 und 134 auf, die sich zwischen den Abstützabschnitten 116 und 118 und jeweils einem der Verbindungsabschnitte 106 und 108 erstrecken. Die Abschnitte 132 und 134 erstrecken sich abgewinkelt zu den Abstützabschnitten 116 und 118. Insbesondere können sich die Abschnitte 132 und 134 rechtwinklig zu den Abstützabschnitten 116 und 118 erstrecken. Die Verbindungsabschnitte 106 und 108 können sich wiederum abgewinkelt zu den Abschnitten 132 und 134 erstrecken. Die Verbindungsabschnitte 106 und 108 erstrecken sich unter einem Winkel zu der Auflagefläche und/oder den Abstützflächen 128, 130. Der Winkel des Verbindungsabschnitts 106 ist größer als der Winkel des Verbindungsabschnitt 108 zu der Auflagefläche und/oder den Abstützflächen 128, 130. Aufgrund des voranstehend beschriebenen Querschnitts weist das Längsprofil 100 eine hohe Festigkeit auf und ist dennoch kostengünstig herzustellen.

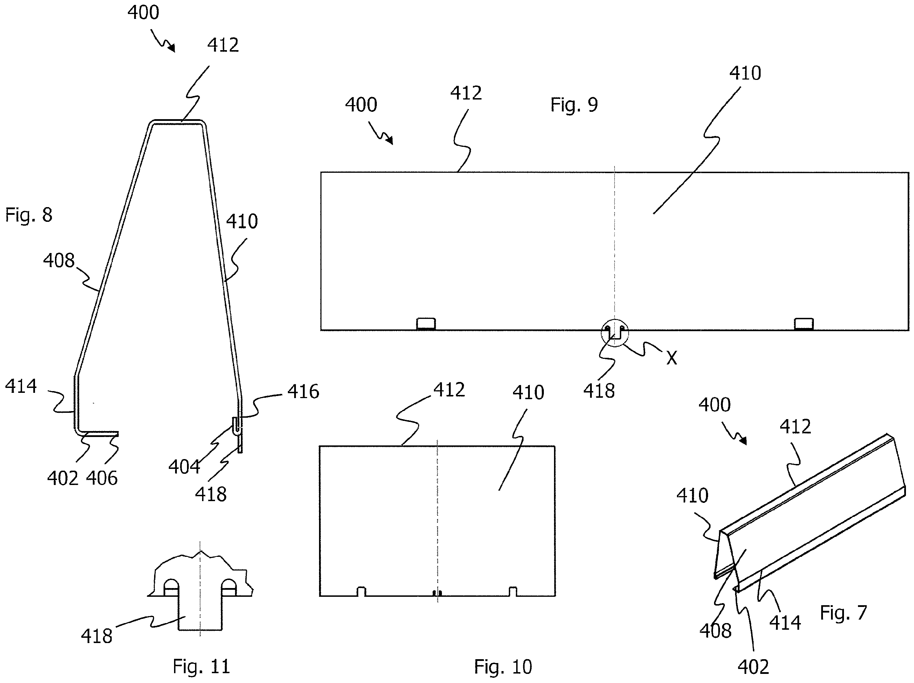

Die Figuren 7 bis 11 zeigen verschiedene Ansichten eines Verbindungsprofils 400, das zum Verbinden von zwei Längsprofilen 100 dient. Der Querschnitt des Verbindungsprofils 400 ist auf den Querschnitt der Längsprofile 100 abgestimmt. Das Verbindungsprofil 400 kann beispielsweise über eine geeignete Passung in dem jeweiligen Längsprofil abschnittsweise aufgenommen und gehalten werden. Das Verbindungsprofil 400 ist derart ausgebildet, dass die zu verbindenden Längsprofile 100 ohne zusätzliche Befestigungsmittel miteinander verbunden werden können. Das Verbindungsprofil 400 weist zwei Abstützabschnitte 402 und 404 auf, zwischen denen eine Öffnung 406 festgelegt wird. Der Abstützabschnitt 404 weist eine Falzung auf. Mit den beiden Abstützabschnitten 402 und 404 kann sich das Verbindungsprofil 400 an den Abstützabschnitten 116 und 118 der Längsprofile 100 abstützen (siehe Figuren 4 bis 6). Das Verbindungsprofil 400 weist ferner zwei seitliche Anlageabschnitte 408 und 410 auf, die über einen Anlageabschnitt 412 miteinander verbunden sind. Die seitlichen Anlageabschnitte 408 und 410 sind über parallel zueinander verlaufenden Abschnitte 414 und 416 miteinander verbunden. Der Abschnitt 414 erstreckt sich im Wesentlichen rechtwinklig zu dem Abstützabschnitt 402. Die Abstützabschnitte 402 und 404 sowie die Anlageabschnitte 408, 410 und 412 legen sich mit ihren Außenflächen zumindest abschnittsweise an die korrespondierenden Innenflächen der Längsprofile 100 an, um auf diese Weise eine Verbindung mit den Längsprofilen herzustellen.

Das Verbindungsprofil 400 weist ein Positionierelement 418 auf, das zur Positionierung des Verbindungsprofils 400 an den zu verbindenden Längsprofilen 100 dient. Das Positionierelement 418 ist mittig an dem Abschnitt 416 ausgebildet und steht über den Abstützabschnitt 404 vor. Das Positionierelement 418 stellt somit einen Vorsprung dar. Anders als der Abstützabschnitt 404 ist das Positionierelement 418 nicht gefalzt. Figur 10 zeigt eine Detailansicht des Details X in Figur 8, in der das Positionierelement 418 gezeigt ist.

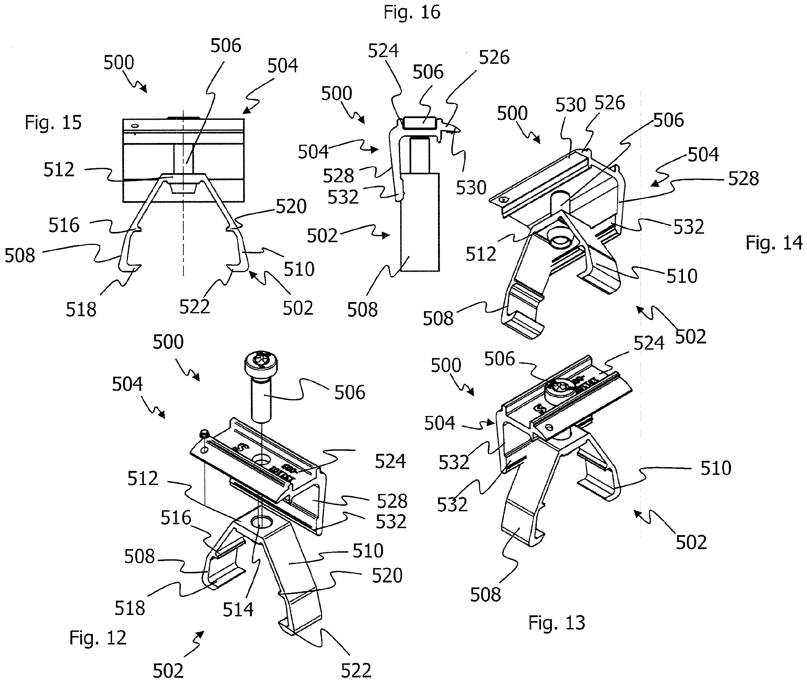

Die Figuren 12 bis 16 zeigen verschiedene Ansichten einer Modulklemme 500 gemäß einer ersten Ausführungsvariante. Die Modulklemme 500 weist einen klammerförmigen Körper 502, ein Anlageelement 504 und eine Schraube 506 auf. Der klammerförmige Körper 502 hat zwei Arme 508 und 510, die über einen Verbindungsabschnitt 512 miteinander verbunden sind. In dem Verbindungsabschnitt 512 ist eine Öffnung 514 zur Aufnahme der Schraube 506 ausgebildet. Die Öffnung 514 weist ein Innengewinde auf, in das die Schraube 506 eingeschraubt werden kann. Die beiden Arme 508 und 510 weisen jeweils zwei Vorsprünge 516, 518, 520 und 522 auf. Die Vorsprünge 516, 518, 520 und 522 sind an der Innenseite der Arme 508 und 510 vorgesehen. Die Vorsprünge 516, 518, 520 und 522 weisen somit jeweils in Richtung des jeweils anderen Arms 508, 510.

Das Anlageelement 504 weist eine abgewinkelte Grundform auf. An dem Anlageelement 504 ist eine Aufnahme 524 zur Aufnahme des Kopfs der Schraube 506 ausgebildet. Ferner weist das Anlageelement 504 einen Anlageabschnitt 526 und einen Abstützabschnitt 528 auf. Der Anlageabschnitt 526 und der Abstützabschnitt 528 erstrecken sich abgewinkelt zueinander. Der Anlageabschnitt 526 weist eine Anlagefläche 530 zur Anlage an einem nicht gezeigten Modulrahmen auf. An dem Abstützabschnitt 528 ist eine Abstützfläche 532 ausgebildet, über die sich das Anlageelement an den klammerförmigen Körper 502 abstützen kann, wie in Figur 15 ersichtlich ist. Das Anlageelement 504 ist dazu ausgebildet, an einem Ende einer Solarmodulanordnung angebracht zu werden, d.h. das Anlageelement 504 liegt nur an einem Modulrahmen an. Mit dem Anlageelement 504 kann ein Modulrahmen eines Solarmoduls an einem Längsprofil 100 angebracht werden.

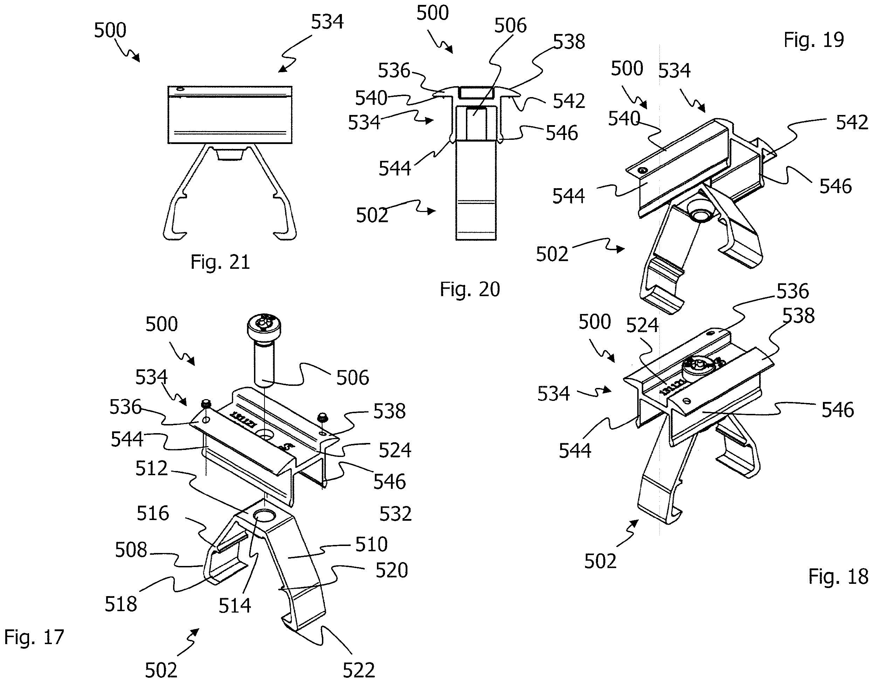

Die Figuren 17 bis 21 zeigen verschiedene Ansichten einer Modulklemme 500 gemäß einer zweiten Ausführungsvariante. Die Modulklemme 500 weist den klammerförmigen Körper 502 und ein Auflageelement 534 auf, das über die Schraube 506 mit dem klammerförmigen Körper 502 verbunden ist. Der klammerförmige Körper 502 ist identisch mit dem klammerförmigen Körper 502 ausgebildet, der mit Bezug auf die Figuren 12 bis 16 beschrieben wurde. Das Auflageelement 534 ist gemäß dieser Ausführungsvariante zur Anlage an zwei benachbarten Modulrahmen ausgebildet. Dazu weist das Anlageelement 534 zwei Anlageabschnitte 536 und 538 auf, die jeweils eine Anlagefläche 540 und 542 aufweisen. Ferner sind an dem Anlageelement 534 die Abstützabschnitte 544 und 546 ausgebildet, zwischen denen sich die Schraube 506 erstreckt. Über die Abstützabschnitte 544 und 546, die sich abgewinkelt zu den Anlageabschnitten 536 und 538 erstrecken, kann sich das Anlageelement 534 an dem klammerförmigen Körper 502 abstützen. Mit jedem der beiden Anlageabschnitte 536 und 538 kann jeweils ein Modulrahmen (nicht gezeigt) über den klammerförmigen Körper 502 und die Schraube 506 gegen ein Längsprofil 100 geklemmt werden.

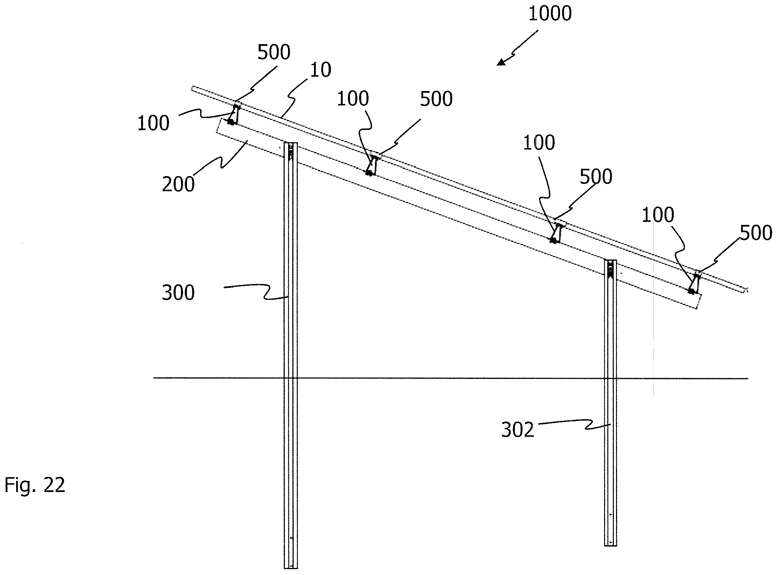

Figur 22 zeigt eine Seitenansicht eines Montagesystems 1000 für Solarmodule 10. Das Montagesystem 1000 ist über die Pfosten 300 und 302 im oder am Untergrund befestigt. Die Pfosten 300 und 302 sind mit einem Querprofil 200 verbunden. Es können zwei oder mehr Längsprofile 100 vorgesehen sein. Die Anzahl der Längsprofile 100 hängt von den angreifenden Lasten und der Anzahl von Modulreihen ab. Das Querprofil 200 trägt in der in Figur 22 gezeigten Ausführungsform vier Längsprofile 100. Die Modulklemmen 500 befestigen die Solarmodule 10 an den Längsprofilen

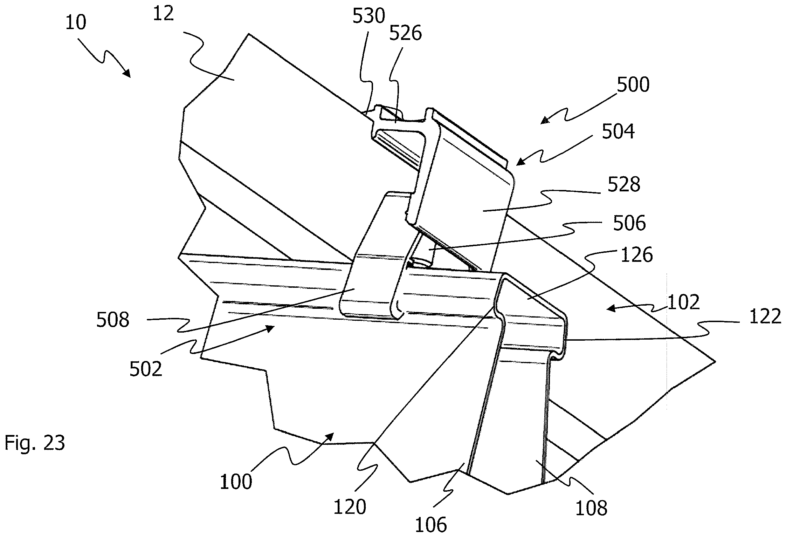

Figur 23 zeigt eine Ansicht, in der ein Modulrahmen 12, eine Modulklemme 500 und ein Längsprofil 100 gezeigt sind. Der Modulrahmen 12 liegt mit seiner Unterseite auf der Auflagefläche 126 des Kopfbereichs 104 des Längsprofils 100 auf. Der klammerförmige Körper 502 der Modulklemme 500 greift mit seinen Armen 508, 510 (nur der Arm 508 gezeigt) an den Angriffsvorsprüngen 120 und 122 des Längsprofils 100 an. Das Anlageelement 504 liegt mit seinem Anlageabschnitt 526 an der Oberseite des Modulrahmens 12 an. Durch die Schraube 506 können der klammerförmige Körper 502 und das Anlageelement 504 gegeneinander verspannt werden, um den Modulrahmen 12 gegen das Längsprofil 100 zu klemmen. Durch die Schraube 506 wird eine Zugkraft auf den klammerförmigen Körper 502 aufgebracht, die den klammerförmigen Körper 502 streckt und so in Eingriff mit den Angriffsvorsprüngen 120, 122 des Kopfbereichs 102 des Längsprofils 100 hält. Das Anlageelement 526 stützt sich mit seinem Abstützabschnitt 528 an den klammerförmigen Körper 502 ab. Die Modulklemme 500 gemäß Figur 23 ist eine Modulklemme zum Anbringen an einem Ende einer Solarmodulanordnung, d.h. ist eine sogenannte Endklemme.

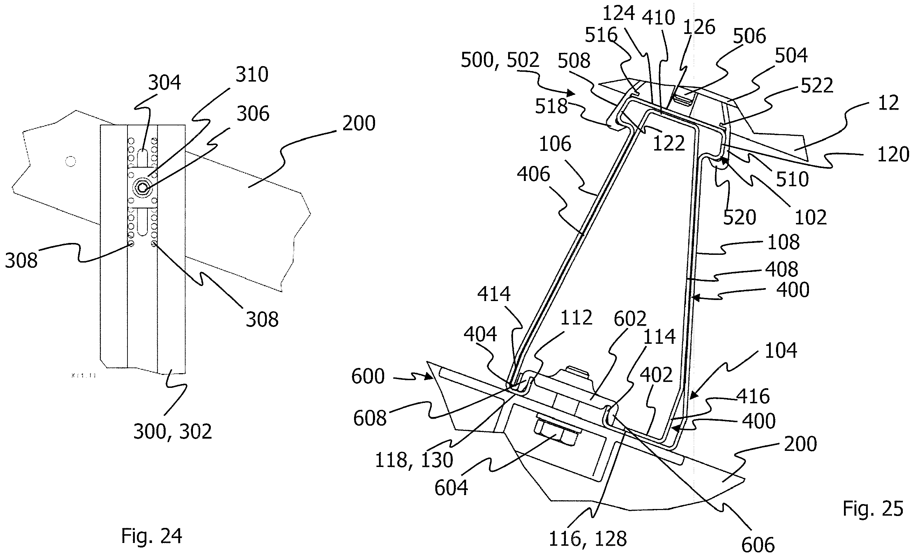

Figur 24 zeigt einen vergrößerten Ausschnitt der Verbindungsstelle zwischen einem der Pfosten 300, 302 und dem Querprofil 200. Die Pfosten weisen ein im Wesentlichen C-förmiges Profil auf. An den Pfosten 300, 302 ist ein Langloch 304 ausgebildet, in das eine Schraube 306 zur Verbindung des Pfostens 300, 302 mit dem Querprofil 200 eingesetzt werden kann. Neben dem Langloch 304 sind mehrere kleinere Öffnungen 308 erkennbar, die mit einem Zwischenelement 310 in Eingriff bringbar sind. Dazu weist das Zwischenelement 310 Vorsprünge auf, die korrespondierend zu den Öffnungen 308 ausgebildet sind und in diese eingreifen können. Über das Langloch 304 und die Öffnungen 308 kann mit dem Zwischenelement 310 die Höhe des Querprofils 200 relativ zum Untergrund eingestellt oder fein justiert werden.

Figur 25 zeigt einen vergrößerten Ausschnitt aus Figur 22, der die Verbindung zwischen dem Modulrahmen 12, dem Längsprofil 100 und dem Querprofil 200 über die Modulklemme 500 zeigt. Innerhalb des Längsprofils 100 ist das Verbindungsprofil 400 erkennbar. Das Verbindungsprofil 400 liegt mit den Außenflächen seiner Anlageabschnitte 402, 406, 408 und 410 an den Längsprofilen 100 an. Das Verbindungsprofil 400 kann über eine Presspassung in dem Längsprofil 100 aufgenommen sein. Das Verbindungsprofil 400 stützt sich insbesondere mit seinen Abschnitten 402 und 404 an den Abstützabschnitten 116 und 118 des Längsprofils 100 ab. Der Abschnitt 410 des Verbindungsprofils 400 liegt an der Innenfläche des Auflageabschnitts 124 des Längsprofils 100 an.

Der Modulrahmen 12 liegt auf der Auflagefläche 126 des Längsprofils 100 auf. Der Modulrahmen 12 wird über die Modulklemme 500, von der in Figur 23 nur die Arme 508 und 510 des klammerförmigen Körpers 502 und Teile der Schraube 506 gezeigt sind, an dem Längsprofil 100 befestigt. Dazu greifen die Arme 508 und 510 insbesondere mit ihren Vorsprüngen 518 und 520 an den Angriffsvorsprüngen 120 und 122 des Kopfbereichs 102 des Längsprofils 100 an. Die Vorsprünge 518 und 520 an den Armen 508 und 510 sind so ausgebildet, dass sie die Angriffsvorsprünge 120 und 122 hintergreifen können. Die Angriffsvorsprünge 120, 122 weisen eine Nase bzw. sind abschnittsweise in Form einer Nase ausgebildet, die von den Vorsprüngen 518 und 520 am Ende der Arme 508 und 510 hintergriffen werden kann. Über die abschnittsweise erkennbare Schraube 506 der Modulklemme 500 wird eine Zugkraft auf die Arme 508 und 510 des klammerförmigen Körpers 502 ausgeübt, über die der Modulrahmen 512 gegen das Längsprofil 100 verspannt werden kann.

Das Längsprofil 100 ist über seinen Anschlagbereich 104 an dem Querprofil 200 befestigt. Das Längsprofil 100 stützt sich über seine Abstützabschnitte 116 und 118 an dem Querprofil 200 ab. An dem Querprofil 200 ist ein Verbinder 600 vorgesehen, der über ein Befestigungselement 602 und eine Schraube 604 eine Verbindung zwischen dem Querprofil 200 und dem Längsprofil 100 herstellt. Das Befestigungselement 602 kann durch die Öffnung 110 in das Längsprofil 100 eingesetzt werden. Das Befestigungselement 602 steht mit den Vorsprüngen 112 und 114 des Längsprofils 100 in Eingriff. Anders ausgedrückt kann das Befestigungselement 602 die Vorsprünge 112 und 114 abschnittsweise aufnehmen. Das Befestigungselement 602 weist Eingriffsabschnitte 606 und 608 auf, die die Vorsprünge 112 und 114 des Befestigungselements um- oder hintergreifen. Der Abstützabschnitt 404 des Verbindungsprofil 400, der einen Falz aufweist, legt sich mit seinem gefalzten Abschnitt an den Eingriffsabschnitt 608 an. Der Stützabschnitt 404 liegt somit an dem Längsprofil 100 und dem Eingriffsabschnitt 608 des Befestigungselements 602 an.

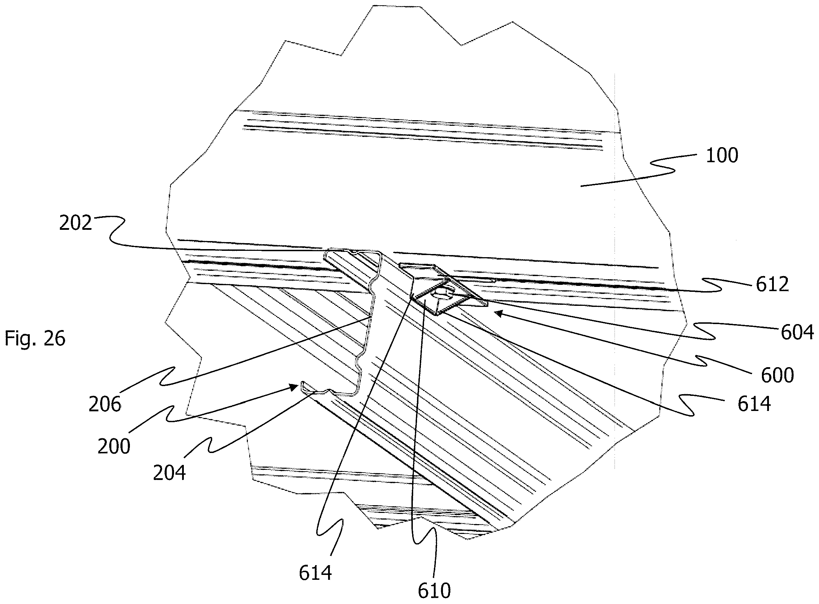

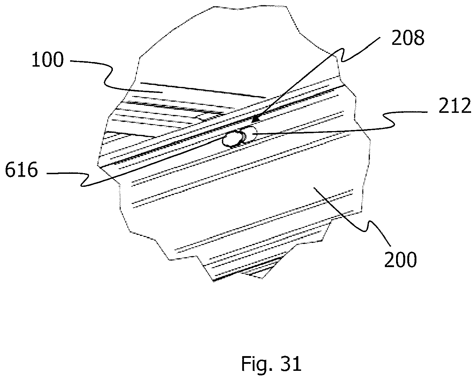

Die Figuren 26 bis 32 zeigen mehrere Ansichten der Verbindung des Längsprofils 100 mit dem Querprofil 200 über die Verbinder 600. Das Querprofil 200 weist einen im Wesentlichen C-förmigen Querschnitt auf. Der Querschnitt des Querprofils 200 hat dementsprechend zwei im Wesentlichen parallele Schenkel 202, 204, die über einen Verbindungschenkel 206 miteinander verbunden sind. Auf dem Schenkel 202 liegt das Längsprofil 100 auf. Der Verbinder 600 kontaktiert sowohl das Längsprofil 100 als auch das Querprofil 200. Dazu weist der Verbinder 600 einen Anlageabschnitt 610 und einen Auflageabschnitt 612 auf. Mit dem Anlageabschnitt 610 liegt der Verbinder 600 an dem Schenkel 206 des Querprofils 200 an und ist mit diesem Querprofil 200 über den Anlageabschnitt 610 verbunden. Auf dem Auflageabschnitt 612 liegt das Längsprofil 100 auf. Der Verbinder 600 ist über die Schraube 604 mit dem Längsprofil 100 verbunden. Der Verbinder 600 hat ferner zwei Versteifungsabschnitte 614, die sich zwischen dem Anlageabschnitt 610 und dem Auflageabschnitt 612 erstrecken.

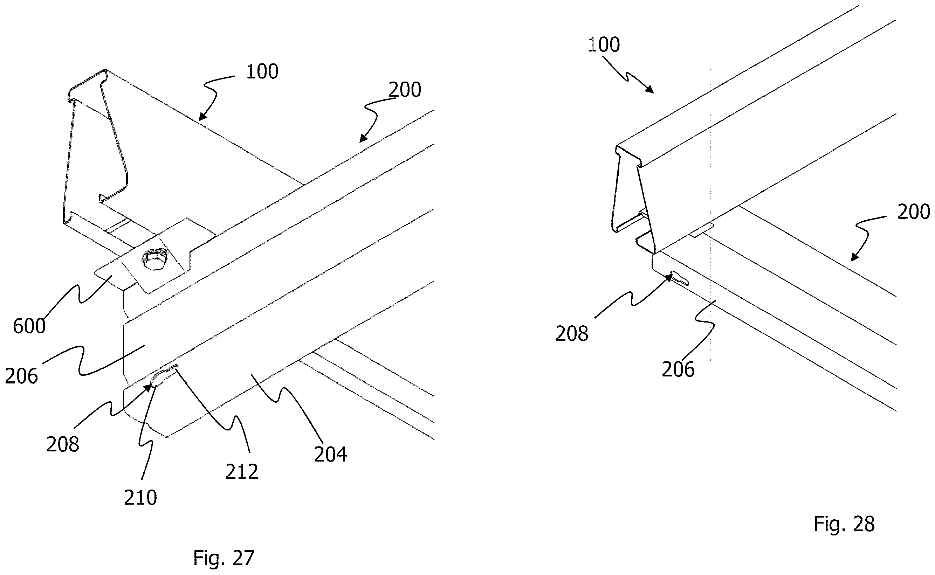

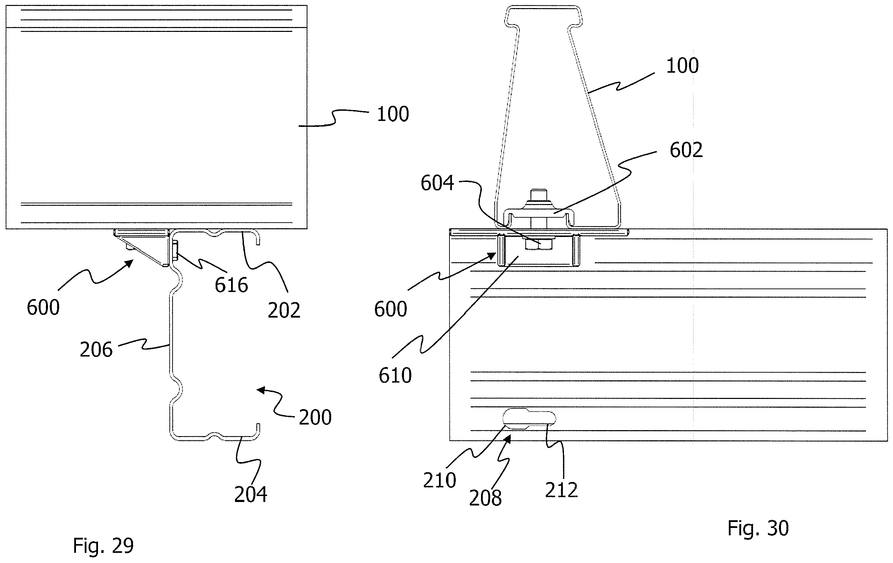

Das Querprofil 200 weist eine oder mehrere Öffnungen 208 auf (siehe Figuren 26, 27 und 29). Die Öffnungen 208 sind schlüsselförmig ausgebildet. Über die Öffnungen 208 kann der Verbinder 600 an den Querprofilen 200 angebracht werden. Die Öffnungen 208 haben einen Einführabschnitt 210 mit größeren Querschnitt und einen Halteabschnitt 212 mit kleinerem Querschnitt. In dem Einführabschnitt 210 kann ein Verriegelungselement 616 des Verbinders 600 eingesetzt werden (siehe Figuren 28 und 30). Der Verbinder 600 wird dann in Richtung des Halteabschnitts 212 der Öffnung 208 verschoben, sodass das Verriegelungselement 616 des Verbinders 600 die Ränder des Halteabschnitts 212 der Öffnung 208 hintergreifen kann. Mit anderen Worten weist das Verriegelungselement 616 einen Kopf auf, der die Ränder der Öffnung 208 hintergreifen kann. Dazu kann das Verbindungselement 616 beispielsweise einen T-förmigen Querschnitt aufweisen. Durch eine entsprechende Ausrichtung der Querprofile 200 mit einem Neigungswinkel kann der Verbinder 600 zusammen mit den daran angebrachten Längsprofilen 100 im Wesentlichen über die Schwerkraft in dem Halteabschnitt 212 der Öffnung 208 des Querprofils 200 gehalten werden. Dies ist beispielsweise in Figur 30 gezeigt. Weitere Befestigungsmittel sind zur Befestigung des Verbinders 600 an dem Querprofil 200 nicht notwendig.

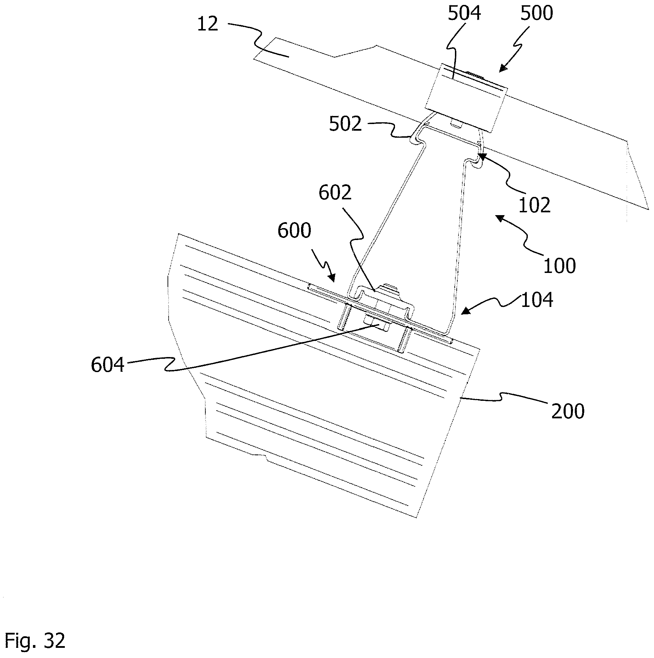

In Figur 32 wird der Modulrahmen 12 über die Modulklemme 500 an dem Längsprofil 100 angebracht. Dazu greift der klammerförmige Körper 502 an dem Antriebsabschnitt 102 des Längsprofils 100 an. Der Anschlagbereich 104 des Längsprofils 100 stützt sich an dem Querprofil 200 ab. Das Längsprofil 100 ist über einen Verbinder 600 mit dem Querprofil 200 verbunden. Um eine Verbindung zwischen dem Längsprofil 100 und dem Querprofil 200 herzustellen, weist der Verbinder 600 das Befestigungselement 602 und die Schraube 604 auf. Das Befestigungselement 602 kann in das Längsprofil 100 eingesetzt und mit dem Anschlagbereich 104 des Längsprofils 100 in Eingriff gebracht werden. Der wesentliche Unterschied zwischen den Figuren 25 und 32 liegt darin, dass gemäß Figur 32 keinen Verbindungsprofil 400 vorgesehen ist, d. h. Figur 32 zeigt einen Abschnitt des Längsprofils 100, in dem keine Verbindung mit einem weiteren Längsprofil 100 hergestellt werden muss.

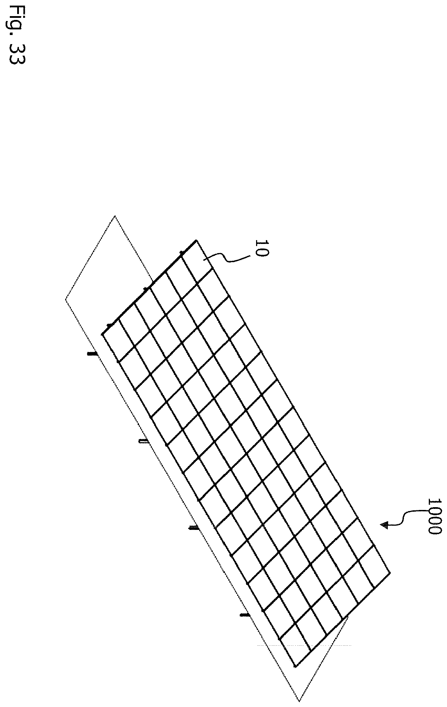

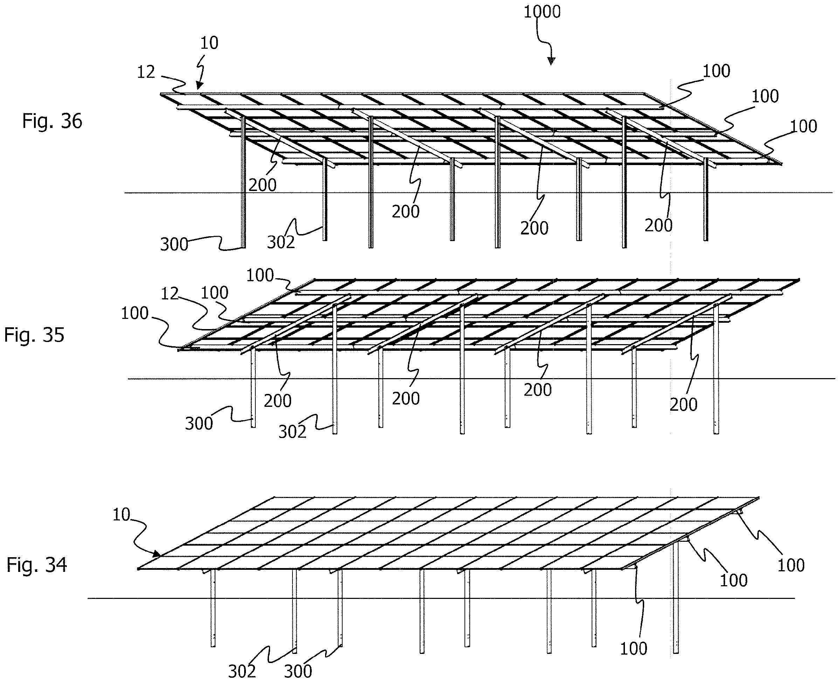

Die Figuren 33 bis 36 zeigen verschiedene perspektivische Ansichten eines Montagesystems 1000 für Solarmodule 10 gemäß einer zweiten Ausführungsform. Die Solarmodule 10 sind bei dieser Ausführungsform des Montagesystems 1000 in horizontaler Richtung angeordnet, d. h. im Querformat bzw. "landscape" (siehe Figur 33). Die Solarmodule 10 weisen Modulrahmen 12 auf.

Auch das in den Figuren 33 bis 36 gezeigte Montagesystem 1000 weist Längsprofile 100, Querprofile 200 und Pfosten 300, 302 auf. Jeweils ein Querprofil 200 ist mit den beiden Pfosten 300 und 302 verbunden. Es können zwei oder mehr Längsprofile 100 vorgesehen sein. Anders als bei der mit Bezug auf die Figuren 1 bis 4 beschriebenen Ausführungsformen sind bei den Montagesystem gemäß der Figuren 33 bis 36 nur drei Längsprofile 100 vorgesehen. Bei dieser Ausrichtung der Solarmodule kann die Anzahl der Längsprofile 100 von den angreifenden Lasten abhängen.

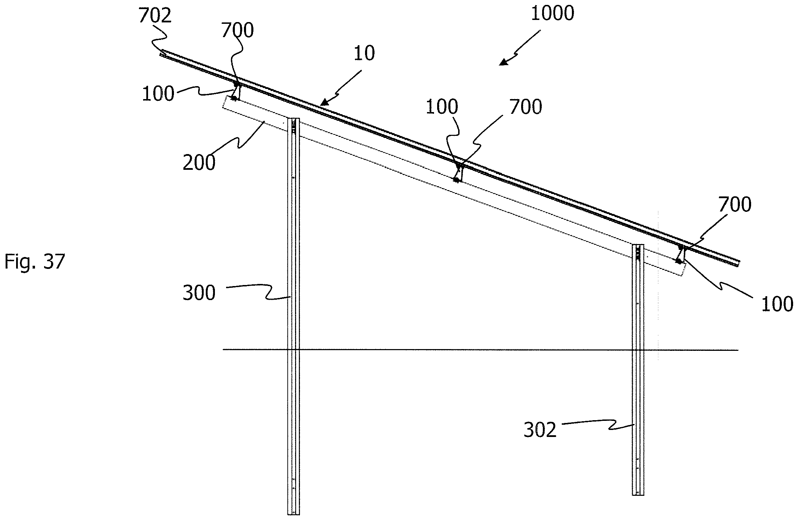

Figur 37 zeigt eine Seitenansicht des Montagesystems 1000. Bereits in Figur 37 wird deutlich, dass anders als bei der ersten Ausführungsform keine Modulklemmen an dem äußeren Modulrahmen 10 angreifen. Zur Befestigung der Solarmodule 10 an den Querprofilen 100 sind gemäß dieser Ausführungsform eine Klemmeinrichtung 700 und Befestigungsprofile 702 aufweist. Die Klemmeinrichtungen 700, die in Figur 37 nur ansatzweise erkennbar sind, greifen an dem Befestigungsprofil 702 und den Längsprofilen 100 an.

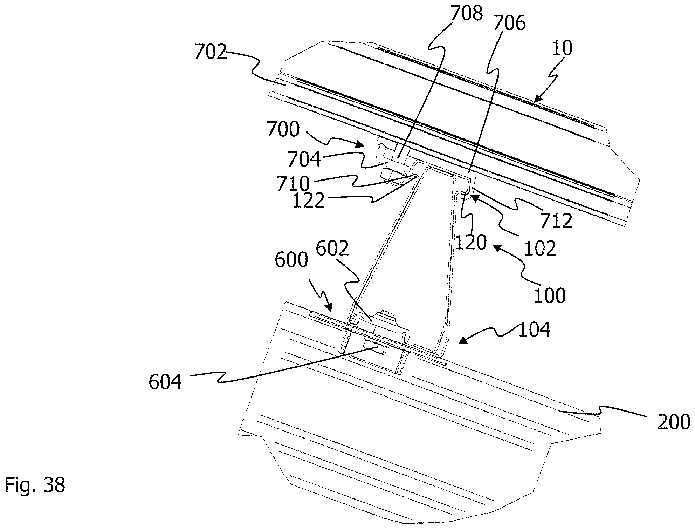

Figur 38 zeigt einen vergrößerten Ausschnitt der Verbindung der Solarmodule 10 mit den Längsprofilen 100. Die Klemmeinrichtung 700 weist ein Klemmelement 704, ein-Basiselement 706 und eine Schraube 708 auf. Das Klemmelement 704 hat einen Klemmabschnitt 710, der gewölbt bzw. gekrümmt ausgebildet ist. Der Klemmabschnitt 710 kann an dem Antriebsabschnitt 122 des Längsprofils 100 angreifen. Das Basiselement 706 weist einen Halterungsabschnitt 712 auf, der den Angriffsvorsprung 120 zumindest teilweise aufnimmt. Über die Schraube 708 kann das Klemmelement 704 gegen das Basiselement 706 verspannt werden und so das Befestigungsprofil 702 an das Längsprofil 100 geklemmt werden. Zum Klemmen des Längsprofils 100 ist an der Schraube 708 eine Mutter vorgesehen. Die Schraube 708 mit der Mutter kann auch durch eine Abreißschraube ersetzt werden.

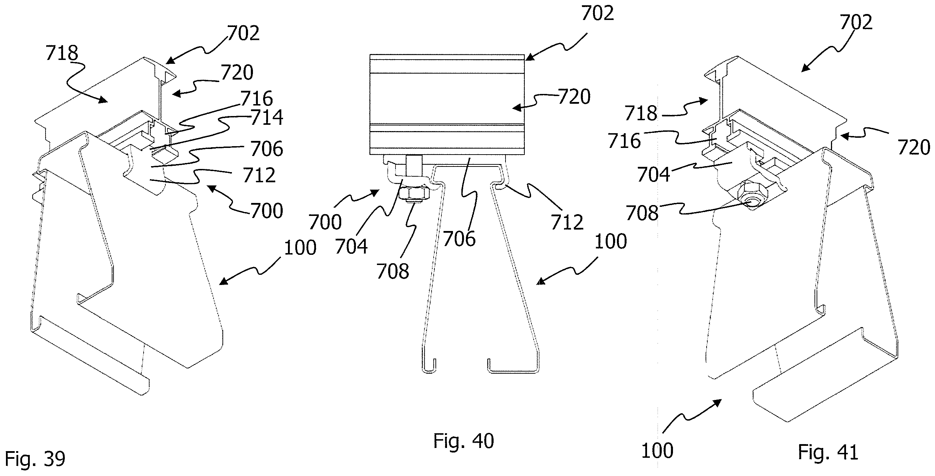

Die Figuren 39 bis 41 zeigen verschiedene Ansichten des Befestigungsprofils 702 und der Klemmeinrichtung 700 im an einem Längsprofils 100 angebrachten Zustand. Die Klemmeinrichtung 700 hat das Klemmelement 704, das Basiselement 706 und die Schraube 708, die das Klemmelement 704 an dem Basiselement 706 hält. Das Klemmelement 704 kann das Längsprofils 100 gegen das Basiselement 706 verklemmen. An dem Basiselement 706 ist ein Vorsprung 714 ausgebildet, der in entgegengesetzter Richtung zu dem Halterungsabschnitt 712 von dem Basiselement 706 vorsteht. Der Vorsprung 714 kann im Querschnitt T-förmig ausgebildet sein. Der Vorsprung 714 kann in eine Befestigungsschiene 716 des Befestigungsprofils 702 eingreifen. Die Befestigungsschiene 716 liegt zumindest abschnittsweise auf dem Basiselement 706 der Klemmeinrichtung 700 auf. Der nicht gezeigte Kopf der Schraube 708 befindet sich ebenfalls in der Befestigungsschiene 716, um über das Anziehen der Mutter an der Schraube 708 eine Klemmwirkung zwischen dem Befestigungsprofil 702 und dem Längsprofil 100 erzeugen zu können. Das Befestigungsprofil 702 hat ferner zwei Aufnahmeabschnitte 718 und 720, die zur Aufnahme jeweils eines Solarmodulrahmens ausgebildet sind.

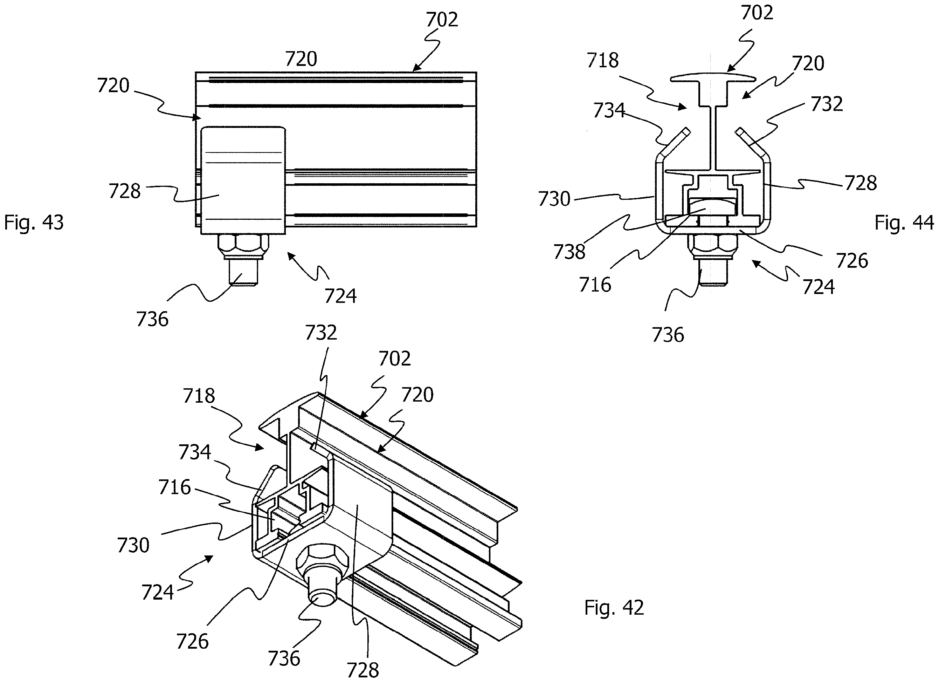

Die Figuren 42, 43 und 44 zeigen ein Befestigungselement 724 im an dem Befestigungsprofil 702 angebrachten Zustand. Über das Befestigungselement 724 können nicht gezeigte Modulrahmen an dem Befestigungsprofil 702 befestigt werden. Das Befestigungsprofil 702 wird wiederum über die Klemmeinrichtung 700 (siehe Figuren 39 bis 41) an den Längsprofilen 100 angebracht. Das Befestigungselement 724 weist einen Befestigungsabschnitt 726 und zwei Schenkel 728 und 730 auf. Die Schenkel 728 und 730 sind an ihren Enden 732 und 734 nach innen, d. h. aufeinander zu gebogen. Das Befestigungselement 724 weist ferner eine Schraube 736 auf, die sich durch den Befestigungsabschnitt 726 erstreckt. Die Schraube 736 hat einen Kopf 738, der in der Befestigungsschiene 716 aufgenommen bzw. in die Befestigungsschiene 716 eingesetzt ist. An der Schraube 736 ist ferner eine Mutter vorgesehen, die zum Verklemmen des Befestigungselements 724 mit dem Befestigungsprofil 702 vorgesehen ist. Die beiden nach innen gebogenen Enden 732 und 734 der Schenkel 728 und 730 greifen in die Aufnahmebereiche 718 und 720 des Befestigungsprofils 702 ein. Dadurch können sich die Modulrahmen an eine der Seitenflächen der Schenkel 728 und 730 anlegen und werden auf diese Weise an dem Befestigungsprofil befestigt. Das Befestigungselement 724 kann auf das Befestigungsprofil 702 aufgesteckt und entlang des Befestigungsprofils 702 verschoben werden. Ist die gewünschte Position des Befestigungselements 724 erreicht, wird die Mutter angezogen und das Befestigungselement 724 an dem Befestigungsprofil 702 befestigt. Vorzugsweise kann das Befestigungselement 724 an einem Ende des Befestigungsprofils 702 angebracht werden, um die Module halten oder abstützen zu können.

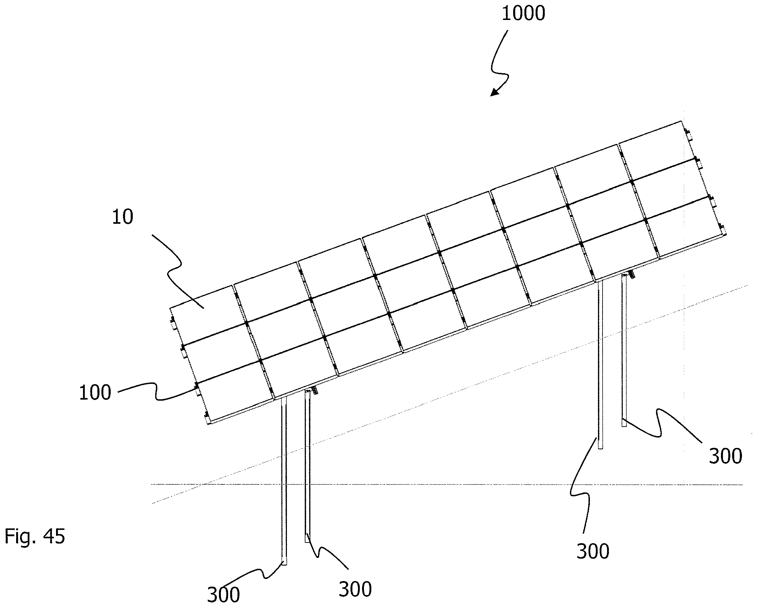

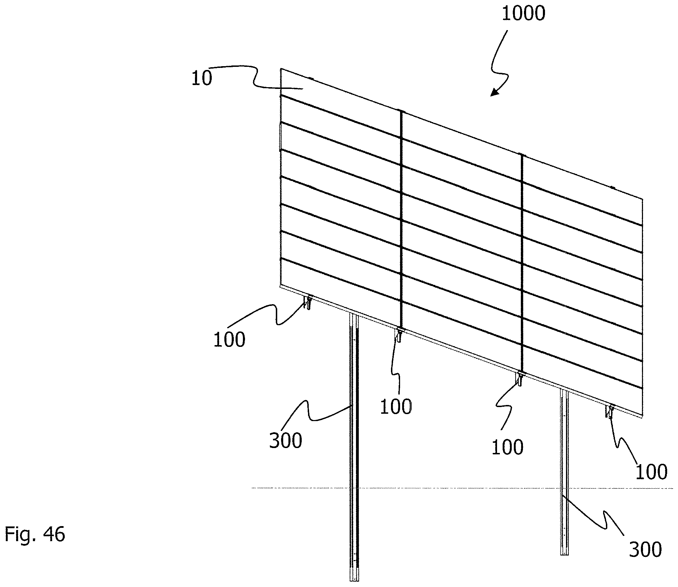

Die Figuren 45 und 46 zeigen weitere Ausführungsformen von Montagesystemen 1000, die in Abhängigkeit des Geländes in Querrichtung geneigt werden können. Dazu können die Pfosten mit Neigungsvorrichtungen 800 versehen oder als Neigungsvorrichtung 800 ausgebildet werden. Die Montagesysteme 1000 weisen jeweils Pfosten 300 auf, die eine Neigungsvorrichtung 800 aufweisen.

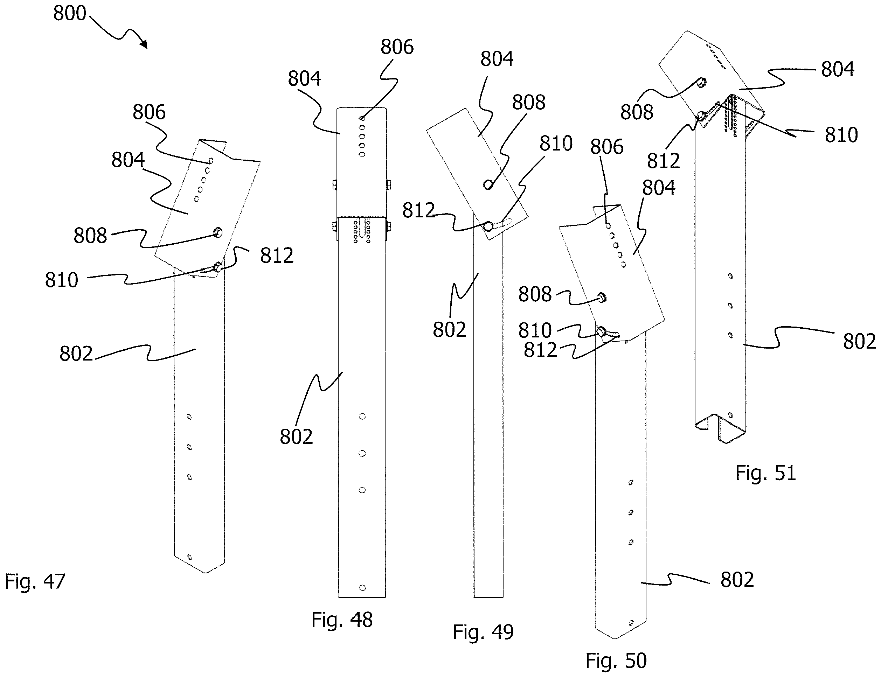

Die in den Figuren 47 bis 52 gezeigte Neigungsvorrichtung 800 weist einen stationären Pfostenabschnitt 802 auf, der von einem der Pfosten 300, 302 gebildet werden kann. An dem stationären Pfostenabschnitt 802 ist ein verschwenkbarer Neigungsabschnitt 804 angeordnet. An dem Neigungsabschnitt 804 sind Öffnungen 806 ausgebildet, an denen ein Querprofil 200 angebracht werden kann. Die Schraube 808, die den stationären Pfostenabschnitt 802 und den Neigungsabschnitt 804 miteinander verbindet, bildet den Schwenkpunkt, um den der Neigungsabschnitt 804 verschwenkt werden kann. An dem Neigungsabschnitt 804 ist ferner ein gekrümmtes Langloch 810 ausgebildet, das mit einer Schraube 812 zur Einstellung des Neigungswinkels zusammenwirkt. Der eingestellte Neigungswinkel kann über die Schraube 812 fixiert werden. Die Erstreckung des gekrümmten Langlochs 810 gibt einen Neigungswinkelbereich für den Neigungswinkel vor, der über die Neigungsvorrichtung 800 eingestellt werden kann. Das gekrümmten Langloch kann durch eine Aneinderreihung von Bohrungen gebildet werden.

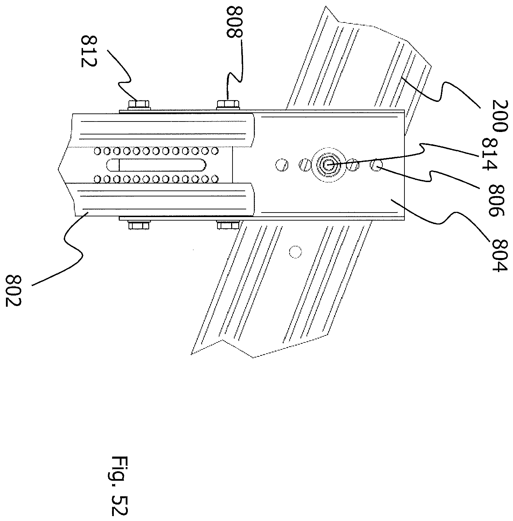

Figur 52 zeigt die Neigungsvorrichtung 800 mit einem daran angebrachten Querprofil 200. Das Querprofil 200 ist über die Schraube 814 an dem Neigungsabschnitt 804 angebracht. Die Schraube 808 bildet den Schwenkpunkt, um den der Neigungsabschnitt 804 verschwenkt werden kann. Die Schraube 812 dient zur Fixierung des einmal eingestellten Neigungswinkels.

## Patentansprüche

1. Längsprofil (100) für ein Montagesystem (1000) für Solarmodule (10, 12), mit: wenigstens einem Anschlagbereich (104), der zur Befestigung des Längsprofils (100) an einem Querprofil (200) ausgebildet ist, wobei der wenigstens eine Anschlagbereich (104) wenigstens eine Abstützfläche (128, 130) zur Abstützung an dem Querprofil (200) aufweist, und
wenigstens einen Kopfbereich (102), der über wenigstens einen Verbindungsabschnitt (106, 108) mit dem wenigstens einen Anschlagbereich (104) verbunden ist, wobei der wenigstens eine Kopfbereich (102) wenigstens eine Auflagefläche (126) für wenigstens einen Abschnitt eines Modulrahmens (12) des Solarmoduls (10) aufweist, wobei der wenigstens eine Kopfbereich (102) wenigstens einen Angriffsvorsprung (120, 122) aufweist, der als Angriffspunkt für eine Befestigungseinrichtung (500, 700) ausgebildet ist, **dadurch gekennzeichnet, dass** der wenigstens eine Kopfbereich (102) wenigstens zwei in entgegengesetzte Richtungen voneinander weg weisende Angriffsvorsprünge (120, 122) aufweist.

2. Längsprofil (100) nach Anspruch 1,
wobei der Kopfbereich (102) wenigstens einen Auflageabschnitt (124) hat, der die wenigstens zwei Angriffsvorsprünge (120, 122) verbindet, wobei der Auflageabschnitt (124) die wenigstens eine Auflagefläche (126) aufweist,
und/oder
wobei sich der wenigstens eine Verbindungsabschnitt (106, 108) unter einem Winkel zu der wenigstens einen Abstützfläche (128, 130) und/oder der wenigstens einen Auflagefläche (126) erstreckt.

3. Längsprofil (100) nach Anspruch 1 oder 2,
wobei der wenigstens eine Anschlagbereich (104) wenigstens eine Befestigungsöffnung (110) aufweist.

4. Längsprofil (100) nach Anspruch 3,
wobei die wenigstens eine Befestigungsöffnung (110) zwischen wenigstens zwei in das Innere des Längsprofils (100) weisenden Vorsprüngen (112, 114) festgelegt ist, die mit wenigstens einem Befestigungselement in Eingriff bringbar sind.

5. Längsprofil (100) nach einem Anspruch 3 oder 4,
wobei der wenigstens eine Anschlagbereich (104) wenigstens einen Abstützabschnitt (116, 118) aufweist, an dem die wenigstens eine Abstützfläche (128, 130) ausgebildet ist.

6. Verbindungsprofil (400) zur Verbindung von wenigstens zwei Längsprofilen (100) nach einem der Ansprüche 1 bis 5,
wobei das Verbindungsprofil (400) derart ausgebildet ist, dass es in die zu verbindenden Längsprofile (100) formschlüssig einsetzbar ist.

7. Verbindungsprofil (400) nach Anspruch 6, wobei das Verbindungsprofil (400) wenigstens ein Positionierelement (418) aufweist.

8. Modulklemme (500) zur Befestigung eines Solarmoduls (10) an einem Längsprofil (100) nach einem der Ansprüche 1 bis 5, mit:
einem klammerförmigen Körper (502), der wenigstens zwei Arme (508, 510) aufweist, die mit einem Kopfbereich (102) eines Längsprofils (100) in Eingriff bringbar sind,
einem Anlageelement (504), das zur Anlage an dem Modulrahmen (12) ausgebildet ist, und
wenigstens einer Schraube (506), die den klammerförmigen Körper (502) mit dem Anlageelement (504) verbindet.

9. Modulklemme (500) nach Anspruch 8,
wobei jeder Arm (508, 510) des klammerförmigen Körpers (502) wenigstens einen in Richtung des jeweils anderen Arms (508, 510) weisenden Vorsprung (516, 518, 520, 522) hat,
und/oder
wobei das Anlageelement (504) wenigstens einen Anlageabschnitt (526) zur Anlage an dem Modulrahmen (12) und wenigstens einen Abstützabschnitt (528) zum Abstützen an dem klammerförmigen Körper (502) aufweist.

10. Querprofil (200) zur Verbindung mit einem Längsprofil (100) nach einem der Ansprüche 1 bis 5,
wobei das Querprofil (200) wenigstens eine Öffnung (208) aufweist, die einen Einführabschnitt (210) und einen Halteabschnitt (212) hat, wobei der Einführabschnitt (210) und der Halteabschnitt (212) unterschiedliche Querschnitte haben.

11. Verbinder (600) zur Verbindung wenigstens eines Längsprofils (100) nach einem der Ansprüche 1 bis 5 und wenigstens eines Querprofils (200) nach Anspruch 10,
wobei der Verbinder (600) wenigstens ein Verriegelungselement (616) aufweist, das zum Einsetzen in den Einführabschnitt (210) der Öffnung (208) und zum Hintergreifen der Ränder der Öffnung (208) im Halteabschnitt (212) ausgebildet ist.

12. Befestigungssystem (700, 702, 724) zur Befestigung von Solarmodulen (10) an einem Längsprofil (100) nach einem der Ansprüche 1 bis 5, mit:
wenigstens einem Befestigungsprofil (702), das zur abschnittsweisen Aufnahme von wenigstens einem Modulrahmen (12) eines Solarmoduls ausgebildet ist,
wenigstens einer Klemmeinrichtung (700), die das wenigstens eine Befestigungsprofil (702) an dem Längsprofil (100) hält, und
wenigstens einem Befestigungselement (724), das mit dem Befestigungsprofil (702) in Eingriff bringbar ist, um die Modulrahmen (12) an dem Befestigungsprofil (702) zu halten.

13. Befestigungssystem nach Anspruch 12,
wobei das Befestigungsprofil (702) wenigstens zwei Aufnahmeabschnitte (718, 720) aufweist, in die das wenigstens eine Befestigungselement (724) zum Befestigen der Solarmodule (10) eingreift.

14. Montagesystem (1000) für Solarmodule (10), mit:
einem oder mehreren Längsprofilen (100) nach einem der Ansprüche 1 bis 5,
einem oder mehreren Querprofilen (200), die mit den Längsprofilen (100) verbunden sind, und
mehreren Pfosten (300, 302), die mit einem oder mehreren der Querprofile (200) verbunden sind.

15. Montagesystem (1000) nach Anspruch 14,
wobei das Querprofil ein Querprofil (200) gemäß Anspruch 10 ist.

16. Montagesystem (1000) nach Anspruch 15,
wobei das Montagesystem (100) einen oder mehrere Verbinder (600) nach Anspruch 11 zum Verbinden eines Längsprofils (100) mit einem Querprofil (200) aufweist.

17. Montagesystem (1000) nach einem der Ansprüche 14 bis 16,
wobei das Montagesystem (1000) wenigstens eine Modulklemme (500) nach Anspruch 8 oder 9 zum Befestigen der Solarmodule (10) an einem Querprofil (200) aufweist,
und/oder
wobei das Montagesystem (1000) wenigstens ein Befestigungssystem nach Anspruch 12 oder 13 zum Befestigen der Solarmodule (10) an einem Längsprofil (100) aufweist.

18. Montagesystem (1000) nach einem der Ansprüche 14 bis 17,
wobei das Montagesystem (1000) wenigstens eine Neigungsvorrichtung (800) aufweist, mit der die Neigung der Solarmodule (10) einstellbar ist,
wobei die Neigungsvorrichtung (800) optional einen stationären Pfostenabschnitt (802) und einen verschwenkbaren Neigungsabschnitt (804) aufweist, der relativ zu dem Pfostenabschnitt (802) um einen Schwenkpunkt verschwenkbar ist.

## Claims

1. A longitudinal profile (100) for a mounting system (1000) for solar modules (10, 12), comprising:
at least one stop area (104) which is configured to fasten the longitudinal profile (100) to a transverse profile (200), wherein the at least one stop area (104) has at least one support surface (128, 130) for support on the transverse profile (200), and
at least one head area (102) which is connected to the at least one stop area (104) via at least one connecting portion (106, 108), wherein the at least one head area (102) has at least one bearing surface (126) for at least one portion of a module frame (12) of the solar module (10), wherein the at least one head area (102) has at least one engagement projection (120, 122) which is configured as a point of engagement for a fastening device (500, 700), **characterized in that**
the at least one head area (102) has at least two engagement projections (120, 122) pointing away from each other in opposite directions.

2. The longitudinal profile (100) of claim 1,
wherein the head area (102) has at least one bearing portion (124) which connects the at least two engagement projections (120, 122), wherein the bearing portion (124) comprises the at least one bearing surface (126),
and/or
wherein the at least one connecting portion (106, 108) extends at an angle to the at least one support surface (128, 130) and/or the at least one bearing surface (126).

3. The longitudinal profile (100) of claim 1 or 2,
wherein the at least one stop area (104) has at least one fastening opening (110).

4. The longitudinal profile (100) of claim 3,
wherein the at least one fastening opening (110) is defined between at least two projections (112, 114) which point into the interior of the longitudinal profile (100) and which are engageable with at least one fastening element.

5. The longitudinal profile (100) of claim 3 or 4,
wherein the at least one stop area (104) has at least one support portion (116, 118) on which the at least one support surface (128, 130) is formed.

6. A connecting profile (400) for connecting at least two longitudinal profiles (100) of any one of claims 1 to 5,
wherein the connecting profile (400) is configured such that it is insertable into the longitudinal profiles (100) to be connected in a form-fitting manner.

7. The connecting profile (400) of claim 6, wherein the connecting profile (400) has at least one positioning element (418).

8. A module clamp (500) for fastening a solar module (10) to a longitudinal profile (100) of any one of claims 1 to 5, comprising:
a bracket-shaped body (502) with at least two arms (508, 510) which are engageable with a head area (102) of a longitudinal profile (100),
an abutment element (504) which is configured for abutment on the module frame (12), and
at least one screw (506) which connects the bracket-shaped body (502) to the abutment element (504).

9. The module clamp (500) of claim 8,
wherein each arm (508, 510) of the bracket-shaped body (502) has at least one projection (516, 518, 520, 522) pointing in the direction of the respective other arm (508, 510),
and/or
wherein the abutment element (504) has at least one abutment portion (526) for abutment on the module frame (12) and at least one support portion (528) for support on the bracket-shaped body (502).

10. A transverse profile (200) for connection to a longitudinal profile (100) of any one of claims 1 to 5,
wherein the transverse profile (200) has at least one opening (208) which has an insertion portion (210) and a holding portion (212), the insertion portion (210) and the holding portion (212) having different cross sections.

11. A connector (600) for connecting at least one longitudinal profile (100) of any one of claims 1 to 5 and at least one transverse profile (200) of claim 10,
wherein the connector (600) has at least one locking element (616) which is configured for insertion into the insertion portion (210) of the opening (208) and for engaging behind the edges of the opening (208) in the holding portion (212).

12. A fastening system (700, 702, 724) for fastening solar modules (10) to a longitudinal profile (100) of any one of claims 1 to 5, comprising:
at least one fastening profile (702) which is configured to receive at least one module frame (12) of a solar module in sections,
at least one clamping device (700) which holds the at least one fastening profile (702) on the longitudinal profile (100), and
at least one fastening element (724) which is engageable with the fastening profile (702) to hold the module frames (12) on the fastening profile (702).

13. The fastening system of claim 12,
wherein the fastening profile (702) has at least two receiving potions (718, 720) with which the at least one fastening element (724) for fastening the solar modules (10) engages.

14. A mounting system (1000) for solar modules (10), comprising:
one or more longitudinal profiles (100) of any one of claims 1 to 5,
one or more transverse profiles (200) which are connected to the longitudinal profiles (100), and
a plurality of posts (300, 302) which are connected to one or more of the transverse profiles (200).

15. The mounting system (1000) of claim 14,
wherein the transverse profile is a transverse profile (200) of claim 10.

16. The mounting system (1000) of claim 15,
wherein the mounting system (100) comprises one or more connectors (600) of claim 11 for connecting a longitudinal profile (100) to a transverse profile (200).

17. The mounting system (1000) of any one of claims 14 to 16,
wherein the mounting system (1000) comprises at least one module clamp (500) of claim 8 or 9 for fastening the solar modules (10) to a transverse profile (200),
and/or
wherein the mounting system (1000) has at least one fastening system of claim 12 or 13 for fastening the solar modules (10) to a longitudinal profile (100).

18. The mounting system (1000) of any one of claims 14 to 17,
wherein the mounting system (1000) has at least one inclination device (800) for adjusting the inclination of the solar modules (10),
wherein the inclination device (800) optionally has a stationary post portion (802) and a pivotable inclination portion (804) which is pivotable around a pivot point relative to the post portion (802).

## Revendications

1. Profilé longitudinal (100) pour un système de montage (1000) pour des modules solaires (10, 12), comportant :
au moins une zone de butée (104) qui est conçue pour fixer le profilé longitudinal (100) à un profilé transversal (200), ladite au moins une zone de butée (104) comprenant au moins une surface d'appui (128, 130) pour l'appui sur le profilé transversal (200), et
au moins une zone de tête (102) qui est reliée à ladite au moins une zone de butée (104) par l'intermédiaire d'au moins une section de liaison (106, 108), ladite au moins une zone de tête (102) comprenant au moins une surface de support (126) pour au moins une section d'un cadre de module (12) du module solaire (10), ladite au moins une zone de tête (102) comprenant au moins une saillie d'attaque (120, 122) qui est conçue comme point d'attaque pour un dispositif de fixation (500, 700),
**caractérisé en ce que**
ladite au moins une zone de tête (102) comprend au moins deux saillies d'attaque (120, 122) orientées dans des directions opposées l'une à l'autre.

2. Profilé longitudinal (100) selon la revendication 1,
dans lequel la zone de tête (102) comporte au moins une section de support (124) qui relie lesdites au moins deux saillies d'attaque (120, 122), la section de support (124) comprend ladite au moins une surface de support (126),
et/ou
dans lequel ladite au moins une section de liaison (106, 108) s'étend selon un angle par rapport à ladite au moins une surface d'appui (128, 130) et/ou ladite au moins une surface de support (126).

3. Profilé longitudinal (100) selon la revendication 1 ou 2,
dans lequel ladite au moins une zone de butée (104) comprend au moins une ouverture de fixation (110).

4. Profilé longitudinal (100) selon la revendication 3,
dans lequel ladite au moins une ouverture de fixation (110) est définie entre au moins deux saillies (112, 114) orientées vers l'intérieur du profilé longitudinal (100), qui peuvent être mises en prise avec au moins un élément de fixation.

5. Profilé longitudinal (100) selon la revendication 3 ou 4,
dans lequel ladite au moins une zone de butée (104) comprend au moins une section d'appui (116, 118) sur laquelle est formée ladite au moins une surface d'appui (128, 130).

6. Profilé de liaison (400) destiné à relier au moins deux profilés longitudinaux (100) selon l'une des revendications 1 à 5,
dans lequel ledit profilé de liaison (400) est conçu de manière à pouvoir être inséré par complémentarité de forme dans les profilés longitudinaux (100) à relier.

7. Profilé de liaison (400) selon la revendication 6,
dans lequel ledit profilé de liaison (400) comprend au moins un élément de positionnement (418).

8. Pince de module (500) destinée à fixer un module solaire (10) à un profilé longitudinal (100) selon l'une des revendications 1 à 5, comportant :
un corps (502) en forme de pince qui comprend au moins deux bras (508, 510) qui peuvent être mis en prise avec une zone de tête (102) d'un profilé longitudinal (100),
un élément d'application (504) qui est conçu pour s'appliquer sur le cadre de module (12), et
au moins une vis (506) qui relie le corps (502) en forme de pince à l'élément d'application (504).

9. Pince de module (500) selon la revendication 8,
dans laquelle chaque bras (508, 510) du corps (502) en forme de pince comprend au moins une saillie (516, 518, 520, 522) orientée vers l'autre bras respectif (508, 510),
et/ou
dans laquelle l'élément d'application (504) comprend au moins une section d'application (526) destinée à s'appliquer sur le cadre de module (12) et au moins une section d'appui (528) destinée à s'appuyer sur le corps (502) en forme de pince.

10. Profilé transversal (200) destiné à être relié à un profilé longitudinal (100) selon l'une des revendications 1 à 5,
dans lequel ledit profilé transversal (200) comprend au moins une ouverture (208) qui comprend une section d'introduction (210) et une section de retenue (212), la section d'introduction (210) et la section de retenue (212) ayant des sections transversales différentes.

11. Élément de liaison (600) destiné à relier au moins un profilé longitudinal (100) selon l'une des revendications 1 à 5 et au moins un profilé transversal (200) selon la revendication 10,
dans lequel ledit élément de liaison (600) comprend au moins un élément de verrouillage (616) conçu pour être inséré dans la section d'introduction (210) de l'ouverture (208) et pour s'engager derrière les bords de l'ouverture (208) dans la section de retenue (212).

12. Système de fixation (700, 702, 724) destiné à fixer des modules solaires (10) sur un profilé longitudinal (100) selon l'une des revendications 1 à 5, comportant :
au moins un profilé de fixation (702) conçu pour recevoir par sections au moins un cadre de module (12) d'un module solaire,
au moins un dispositif de serrage (700) qui maintient ledit au moins un profilé de fixation (702) sur le profilé longitudinal (100), et
au moins un élément de fixation (724) qui peut être mis en prise avec le profilé de fixation (702) pour maintenir les cadres de module (12) sur le profilé de fixation (702).

13. Système de fixation selon la revendication 12,
dans lequel le profilé de fixation (702) comprend au moins deux sections de réception (718, 720) dans lesquelles s'engage ledit au moins un élément de fixation (724) pour fixer les modules solaires (10).

14. Système de montage (1000) pour modules solaires (10), comportant :
un ou plusieurs profilés longitudinaux (100) selon l'une des revendications 1 à 5,
un ou plusieurs profilés transversaux (200) reliés aux profilés longitudinaux (100), et
plusieurs poteaux (300, 302) reliés à un ou plusieurs des profilés transversaux (200).

15. Système de montage (1000) selon la revendication 14,
dans lequel le profilé transversal est un profilé transversal (200) selon la revendication 10.

16. Système de montage (1000) selon la revendication 15,
dans lequel ledit système de montage (100) comprend un ou plusieurs éléments de liaison (600) selon la revendication 11 pour relier un profilé longitudinal (100) à un profilé transversal (200).

17. Système de montage (1000) selon l'une des revendications 14 à 16,
dans lequel ledit système de montage (1000) comprend au moins une pince de module (500) selon la revendication 8 ou 9 pour fixer les modules solaires (10) à un profilé transversal (200),
et/ou
dans lequel ledit système de montage (1000) comprend au moins un système de fixation selon la revendication 12 ou 13 pour fixer les modules solaires (10) à un profilé longitudinal (100).

18. Système de montage (1000) selon l'une des revendications 14 à 17,
dans lequel ledit système de montage (1000) comprend au moins un dispositif d'inclinaison (800) permettant de régler l'inclinaison des modules solaires (10),
dans lequel le dispositif d'inclinaison (800) comprend en option une section de poteau fixe (802) et une section d'inclinaison pivotante (804) qui peut pivoter par rapport à la section de poteau (802) autour d'un point de pivotement.
